Europäisches Patentamt

European Patent Office

Office européen des brevets

(11) Numéro de publication: **0 012 638**
**B1**

(19)

# (12) FASCICULE DE BREVET EUROPEEN

(45) Date de publication du fascicule du brevet: **24.03.82**

(21) Numéro de dépôt: **79400856.5**

(22) Date de dépôt: **13.11.79**

(51) Int. Cl.³: **F 16 F 9/10, F 16 F 13/00, B 60 K 5/12**

(54) Cale élastique, notamment pour la suspension d'un moteur de véhicule.

(30) Priorité: **07.12.78 FR 7834493**
**03.08.79 FR 7919942**

(43) Date de publication de la demande:
**25.06.80 Bulletin 80/13**

(45) Mention de la délivrance du brevet:
**24.03.82 Bulletin 82/12**

(84) Etats contractants désignés:
**DE GB IT**

(56) Documents cités:
**DE - A - 2 621 725**
**FR - A - 926 845**
**FR - A - 1 590 701**
**FR - A - 2 017 031**
**FR - A - 2 057 808**
**FR - A - 2 168 680**
**FR - A - 2 214 070**
**FR - A - 2 242 605**
**FR - A - 2 298 737**
**FR - A - 2 356 847**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Le Salver, Robert**
**Rue des Coteaux**
**78570 Chanteloup Les Vignes (FR)**
Inventeur: **Poupard, Dominique**
**8 Route du Pavé des Gardes**
**F-92370 Chaville (FR)**

(74) Mandataire: **Moncheny, Michel et al,**
**c/o Cabinet Lavoix 2 Place d'Estienne d'Orves**
**F-75441 Paris Cedex 09 (FR)**

(56) Documents cités:
**FR - A - 2 394 715**
**LU - A - 40 328**
**US - A - 2 535 080**

Courier Press, Leamington Spa, England.

Cale élastique, notamment pour la suspension d'un moteur de véhicule

La présente invention concerne une cale élastique destinée à la suspension d'organes vibrants et, plus particulièrement, de moteurs à combustion interne sur les véhicules automobiles.

On connaît d'après le brevet US—A—2.535.080, une cale élastique formée de deux plaques métalliques entre lesquelles sont collés deux anneaux concentriques en élastomère délimitant une cavité centrale et une cavité annulaire. Ces deux cavités communiquent par des rainures radiales ménagées dans l'une des deux plaques. Une telle cale ne comporte pas un "bloc" en élastomère, mais deux anneaux ou tronçons de tube concentriques collés sur les deux plaques, ce qui est peu favorable à sa résistance et à sa tenue. De plus, les rainures doivent être ménagées dans une plaque métallique, ce qui complique la fabrication et en augmente le coût.

On connaît par ailleurs (Brevet FR—A—2 168 680) des cales élastiques comprenant un bloc de matériau élastomère délimitant deux cavités intérieures remplies de liquide et séparées par un orifice d'amortissement. Elles présentent l'inconvénient de transmettre à la caisse du véhicule les vibrations à fréquence élevée provenant du moteur, car l'orifice d'amortissement doit être calculé pour amortir les vibrations basse fréquence du moteur (5 à 16 Hz) correspondant à la fréquence propre de la masse suspendue, si bien que la force d'amortissement devient très élevée aux fréquences supérieures correspondant aux vibrations provenant des imperfections inévitables d'équilibrage du moteur (30 à 200 Hz).

Dans le brevet FR—A—2.356.847 (AUTOMOBILES PEUGEOT), on élimine cet inconvénient en séparant les deux cavités par une cloison mobile sur une distance prédéterminée à l'intérieur d'une logement dont les sections de passage situées de part et d'autre de la cloison sont suffisamment grandes pour ne pas contrarier le mouvement du liquide entre les deux cavités. Dans ce cas, les vibrations de faible amplitude sont bien filtrées et, de plus, les forces d'entraînement du liquide et de la cloison mobile provoquent une diminution de raideur pour les fréquences inférieures à la fréquence de résonnance des masses de liquide entraînées par les raideurs de résistance à la pression des parois des cavités.

L'invention vise à créer une cale élastique permettant d'obtenir les mêmes résultats, mais avec une conception particulièrement simple et économique.

Elle a ainsi pour objet une cale élastique comprenant un bloc unique en élastomère reliant deux armatures et délimitant au moins deux cavités remplies de liquide et communiquant entre elles, caractérisée en ce qu'elle comporte, comme connu en soi, une cavité centrale et au moins une cavité latérale entourant la cavité centrale et communiquant par au moins un canal avec cette cavité centrale, et en ce que chaque cavité latérale est délimitée vers l'extérieur par une paroi plus mince que la paroi qui délimite la cavité centrale, lesdites cavités et leurs canaux de communication débouchant sur une même face du bloc en élastomère et ayant des surfaces présentant une dépouille pour permettre un démoulage aisé à partir d'une empreinte unique, ces cavités et leurs canaux de liaison étant limités par une plaque de fermeture unique.

Un exemple de réalisation de l'invention fait l'objet de la description qui suit, en référence aux dessins joints dans lesquels:

— la Fig. 1 est une coupe à travers une cale, suivant la ligne 1—1 de la Fig. 2;

— la Fig. 2 est une coupe suivant la ligne 2—2 de la Fig. 1;

— la Fig. 3 est un diagramme donnant la force transmise par la cale des Fig. 1 et 2 au support sur lequel elle est fixée, en fonction de la fréquence;

— la Fig. 4 est une vue en coupe axiale, suivant la ligne 4—4 de la Fig. 5, d'un autre mode de réalisation de la cale suivant l'invention;

— la Fig. 5 est une coupe suivant la ligne 5—5 de la Fig. 4;

— la Fig. 6 est un diagramme donnant la force transmise par la cale des Fig. 4 et 5 au support sur lequel elle est fixée, en fonction de la fréquence;

— la Fig. 7 est une coupe analogue à celle de la Fig. 4, pour un autre mode de réalisation;

— la Fig. 8 est une coupe suivant la ligne 8—8 de la Fig. 7;

— la Fig. 9 est une coupe analogue á celle de la Fig. 4, pour une autre variante;

— la Fig. 10 est une coupe suivant la ligne 10—10 de la Fig. 9;

— la Fig. 11 est une coupe analogue à celle de la Fig. 10, pour un autre mode de réalisation.

La cale représentée au dessin comporte un bloc en élastomère 1 disposé entre deux armatures parallèles 2, 3 sur lesquelles il est adhérisé.

Dans le bloc 1 sont formés une cavité centrale 4, deux cavités latérales 5, 6 et des canaux 7, 8 de liaison entre chaque cavité latérale et la cavité centrale. Les cavités et les canaux débouchent sur l'une des faces du bloc 1, à travers l'armature 2 et leurs surfaces internes présentent une dépouille permettant leur réalisation par une empreinte unique facilement démoulable.

L'ensemble des cavités et canaux est rempli d'un liquide, par exemple de l'eau additionnée d'antigel, et est fermé, de façon étanche, par une plaque 9 sertie sur tout son pourtour sur l'armature 2.

Les parois 10 de la cavité centrale 4, épaisses, présentent une résistance élevée à la pression intérieure exercée par le liquide. Cette résistance est fortement accrue par une armature intermédiaire 11, noyée dans le bloc 1.

Les cavités latérales 5, 6 sont limitées vers l'extérieur, par des parois amincies 12, 13, présentant une faible résistance à la pression exercée par le liquide. De plus, ces parois 12, 13 ne sont situées qu'au droit de la seule armature 2 sur laquelle est sertie la plaque de fermeture 9, mais elles se trouvent en dehors du pourtour des armatures 3 et 11. Les parois 12, 13, ne sont doc pas comprimées entre deux armatures, ce qui facilite leur déformation en flexion.

Dans une cale ainsi conçue, lors d'un mouvement relatif entre les deux armatures 2 et 3, suivant une direction perpendiculaire à leurs plans moyens, une certaine quantité de liquide est transférée, par les canaux 7 et 8, de la cavité centrale 4 aux cavités latérales 5, 6 si les armatures 2, 3 se rapprochent et inversement si les armatures s'éloignent.

Les forces nécessaires pour mettre le liquide en mouvement dans les canaux 7 et 8 croissent comme le carré de la fréquence, à amplitude constante des armatures et tant que l'on reste suffisamment en-dessous de la fréquence de résonance des masses de liquide entraînées.

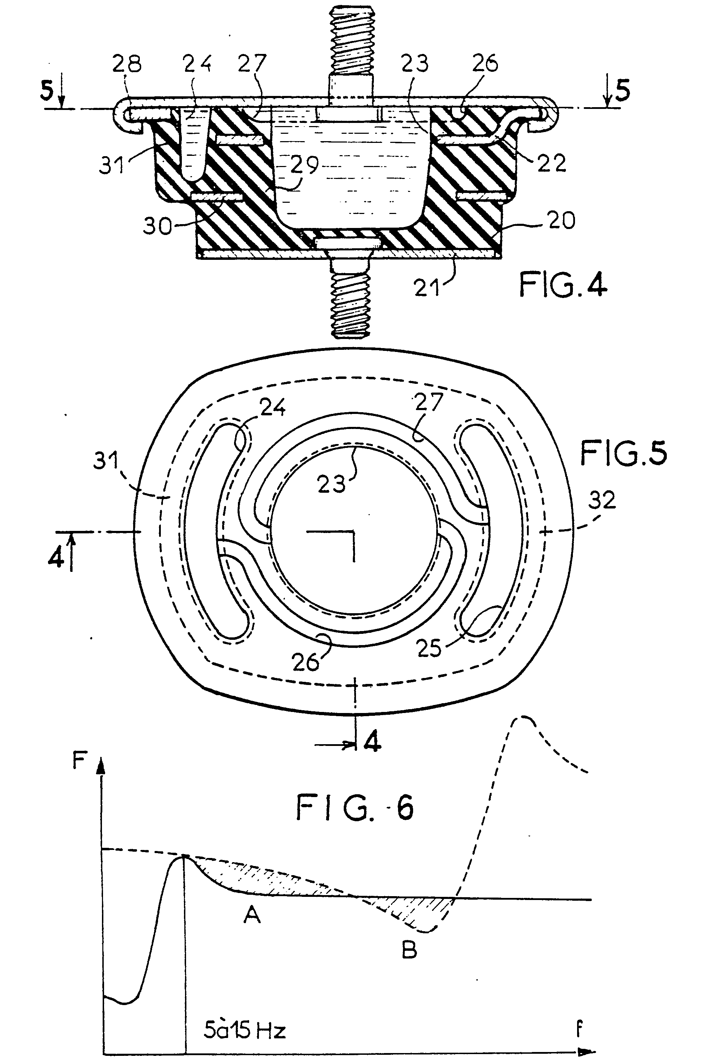

On a représenté, sur le diagramme de la Fig. 3, la variation de la force F transmise au support sur lequel la cale est fixée, en fonction de la fréquence f. Cette force F est égale à la somme algébrique de la force $F_1$ provenant de la raideur propre du bloc d'élastomère, sans liquide, et de la force $F_2$ nécessaire pour mettre le liquide en mouvement.

La force $F_1$ s'exprime par la relation: $F_1 = kx$ où $k$ est la raideur propre de l'élastomère et $x$ l'amplitude du mouvement entre les armatures. C'est la force qui serait transmise au support si la cale ne comportait pas de liquide. Cette force est constante en fonction de la fréquence.

La force $F_2$ s'exprime par les relations ci-dessous, tant que l'on reste suffisamment en-dessous de la fréquence de résonance $fr$ des masses de liquide entraînées:

$$F_2 = m\gamma$$

ou

$$F_2 = m\omega^2 a^2 x$$

s'il s'agit d'un mouvement sinusoïdal où $m$ est la masse de liquide entraînée dans les canaux, $\gamma$ est l'accélération du liquide dans les canaux, $\omega$ représente la pulsation et est égal à $2\pi f$, $a$ est un coefficient qui représente le rapport entre l'amplitude du mouvement du liquide et l'amplitude du mouvement entre les armatures.

Cette force $F_2$ s'oppose à la force $F_1$, si bien que la force F transmise au support présente l'allure de la courbe représentée sur la Fig. 3.

Par rapport à un bloc en élastomère simple, on obtient donc une cale élastique qui possède un filtrage amélioré des vibrations de fréquence élevée, pour une raideur pratiquement identique à basse fréquence.

La zone pratique d'utilisation de la cale est indiquée en A sur la Fig. 3.

On comprend que les meilleurs résultats sont obtenus lorsque la partie basse de la courbe F se situe dans la zone des régimes les plus fréquents du moteur suspendu.

La raideur apparente globale K de la cale qui vient d'être décrite s'exprime par la relation:

$$K = \frac{F_1 + F_2}{x}$$

ou

$$K = k - ma^2\omega^2$$

Il est aisé, par un dimensionnement approprié des cavités et des canaux, d'obtenir une raideur globale minimale de l'ordre de la moitié de la raideur qui donnerait un simple bloc d'élastomère.

On voit que ce résultat intéressant est obtenu avec un support très bon marché et particulièrement facile à réaliser.

Dans l'exemple décrit, on a supposé que le support comportait deux cavités latérales 5, 6 disposées symétriquement. Il est bien évident que ce nombre est tout à fait arbitraire et que l'on pourrait même avoir une cavité latérale annulaire, disposée autour de la cavité centrale.

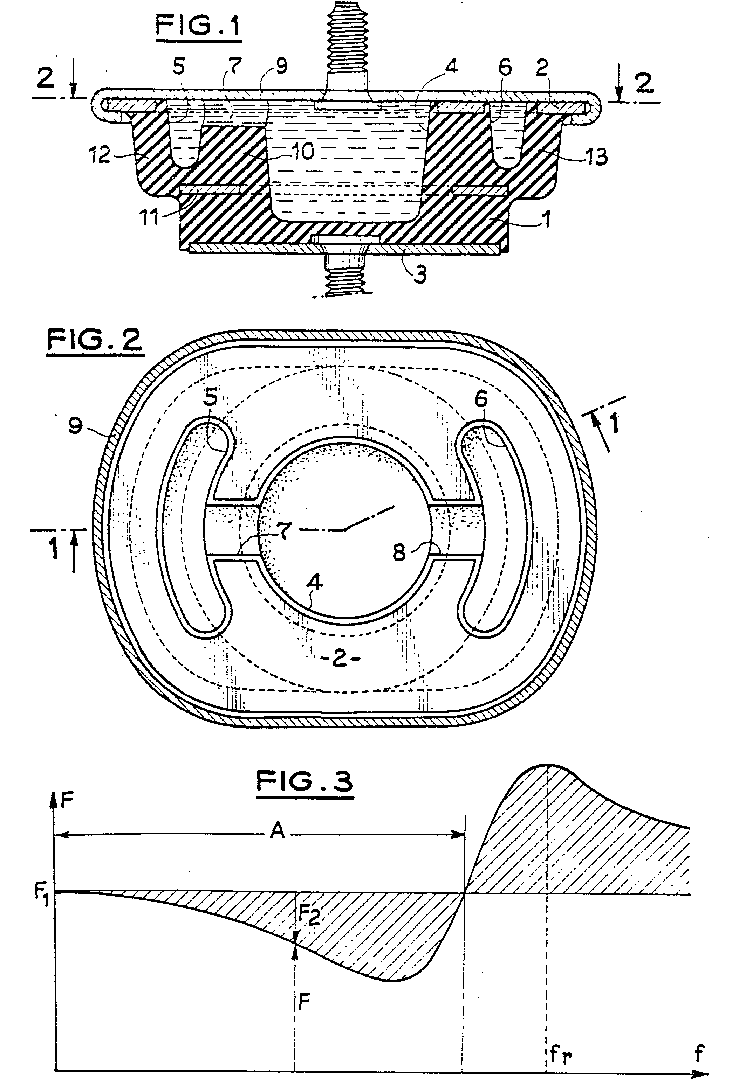

La cale décrite en référence aux Fig. 1 à 3 est conçue pour être efficace à des fréquences inférieures à la fréquence pour laquelle la masse de liquide en mouvement dans les canaux de liaison entre en résonance et l'on y utilise la force nécessaire pour mettre le liquide en mouvement afin de réduire la force provenant de la raideur propre du bloc d'élastomère. On obtient ainsi une cale donnant un très bon filtrage des vibrations de fréquence élevée pour une raideur plus importante à basse fréquence.

Les cales décrites dans les autres modes de réalisation ont pratiquement les mêmes qualités mais présentent en outre un amortissement très nettement supérieur dans la zone des fréquences correspondant à la fréquence de résonance du moteur sur sa suspension. On vise à améliorer ainsi très nettement le confort par une réduction des trépidations du moteur par rapport à la caisse.

Ce résultat est obtenu en donnant au ou à chaque canal de liaison entre la cavité centrale et la ou chaque cavité latérale une longueur suffisamment importante pour que la fréquence de résonance de la masse de liquide en mouvement dans le ou chaque canal coïncide sensiblement avec la fréquence de résonance du moteur sur sa suspension.

La cale élastique représentée sur les Fig. 4 et 5 comporte un bloc en élastomère 20 adhérisé sur des armatures 21 et 22.

Dans le bloc 20 sont formés une cavité centrale 23, deux cavités latérales 24, 25 et des canaux de liaison 26, 27 entre chaque cavité latérale et la cavité centrale. Les cavités et les canaux de liaison débouchent sur l'une des faces du bloc 20 et leurs surfaces internes présentent une dépouille permettant leur réalisation par une empreinte unique facilement démoulable.

L'armature 22 présente des découpes au droit des cavités 23, 24 et 25 ainsi qu'un embouti pour éviter un découpage supplémentaire au droit des canaux de liaison 26, 27. Le tracé de ces derniers apparaît sur la Fig. 2: chaque canal relie un point de la cavité centrale 23 à la cavité latérale 24, 25 diamétralement opposée en contournant la cavité centrale sur environ 180°, ce qui lui donne une longueur relativement importante.

L'ensemble des cavités et canaux est rempli d'un liquide, par exemple de l'eau additionnée d'antigel, et est fermé, de façon étanche, par une plaque 28 sertie sur tout son pourtour sur l'armature 22.

Les parois 29 de la cavité centrale 23, épaisses, présentent une résistance élevée à la pression intérieure exercée par le liquide. Cette résistance est fortement accrue par une armature intermédiaire 30, noyée dans le bloc 20.

Les cavités latérales 24, 25 sont limitées vers l'extérieur par des parois amincies 31, 32 présentant une faible résistance à la pression exercée par le liquide. De plus, ces parois 31, 32 ne sont situées qu'au droit de la seule armature 22 sur laquelle est sertie la plaque de fermeture 28, mais elles se trouvent en dehors du pourtour des armatures 21 et 30. Les parois 31, 32 ne sont donc pas comprimées entre deux armatures, ce qui facilite leur déformation en flexion et évite que les chambres latérales contrarient le mouvement imposé au liquide par la chambre centrale.

Comme pour la cale décrite en référence aux Fig. 1 et 2, les mouvements relatifs entre les armatures 21 et 22, suivant une direction perpendiculaire à leurs plans moyens provoquent un transfert de liquide entre la cavité centrale 23 et les cavités latérales 24, 25. Mais l'allongement des canaux 26, 27 a pour effet de déplacer vers le bas la fréquence de résonance de la masse de liquide entraînée par la raideur de tenue à la pression de la chambre centrale. Sachant que, toutes choses égales par ailleurs, cette fréquence de résonance et proportionnelle à la racine carrée de la section transversale des canaux et inversement proportionnelle à la racine carrée de leur longueur, il est possible de dimensionner ces canaux pour que la fréquence de résonance de la masse de liquide corresponde sensiblement à la fréquence de résonance du moteur sur sa suspension.

Le diagramme de la Fig. 6 montre précisément, en trait plein, l'allure de la courbe représentant la force transmise par la cale au support sur lequel elle est fixée, en fonction de la fréquence, à amplitude constant aux armatures.

Cette courbe présente une pointe pour la fréquence de résonance de la masse de liquide en mouvement dans les canaux de liaison et, grâce à l'allongement de ces derniers, cette fréquence coïncide sensiblement avec la fréquence de résonance du moteur sur sa suspension, en général de l'ordre de 5 à 15 Hz.

On a également représenté sur le diagramme de la Fig. 6, mais en trait interrompu, l'allure de la même courbe avec la cale conforme aux Fig. 1 et 2.

On voit qu'il est possible de donner à la cale sensiblement la même raideur globale pour la fréquence de résonance du moteur sur sa suspension. Ce résultat est obtenu par une réduction de la raideur du corps élastique considéré isolément. Les qualités de filtrage obtenues dans l'un et l'autre cas sont alors sensiblement équivalentes, meilleures dans la zone A et un peu moins bonnes dans la zone B.

Par contre, la mise en résonance du liquide conduit à multiplier par trois à sept la valeur de l'amortissement obtenu pour la fréquence de résonance du moteur sur sa suspension, ce qui réduit considérablement les trépidations du moteur à cette fréquence et améliore donc très nettement le confort.

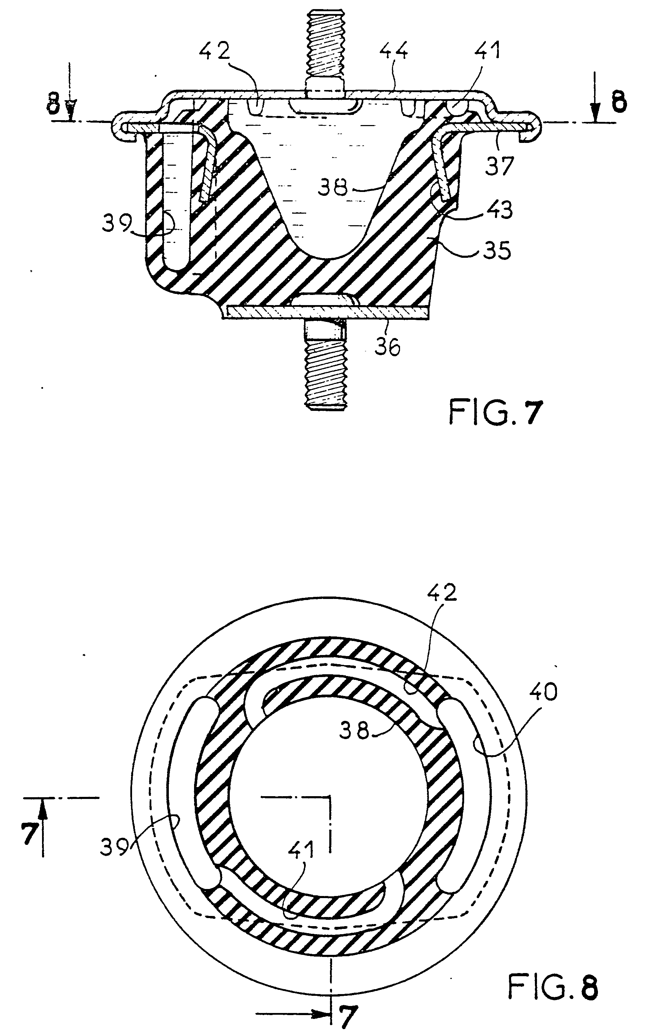

La cale élastique représentée sur les Fig. 7 et 8 comporte un bloc en élastomère 35 adhérisé sur deux armatures 36, 37.

Dans le bloc sont formés, comme dans le premier exemple, une cavité centrale 38, deux cavités latérales 39, 40 et des canaux de liaison 41, 42.

Dans ce troisième exemple, la cavité centrale 38 a une paroi intérieure fortement conique et l'armature 37 présente un embouti 43 également conique. Cette disposition permet d'assouplir le corps élastique dans le sens axial.

Les canaux 41, 42 sont formés dans une surépaisseur du bloc 35, extérieure à la partie plane de l'armature 37 et c'est le couvercle 44 qui présente un embouti pour rejoindre le plan de fermeture sur l'armature 37. Le tracé de ces canaux est également légèrement différent puisqu'ils ne contournent la cavité centrale que sur un angle d'environ 90° à 110°.

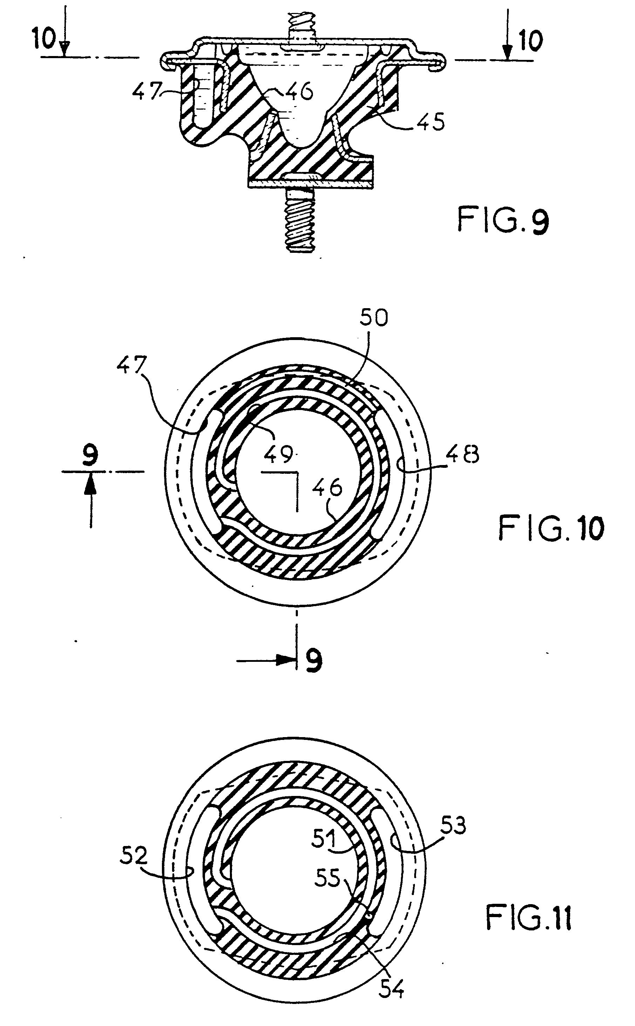

La cale élastique représentée sur les Fig. 9 et 10 comporte, comme les précédentes, un bloc en élastomère 45 dans lequel sont formées une cavité centrale 46 et deux cavités latérales 47, 48.

Dans cet exemple, la cavité centrale 46 est reliée à la cavité latérale 47 par un canal de liaison 49 qui fait pratiquement le tour complet de la cavité centrale 46. Cette disposition permet de donner une longueur accrue à ce canal de liaison. Dans ce cas, le rôle de la seconde chambre latérale 48 est d'absorber le volume de liquide déplacé lors de la mise en charge statique, et pour cela, les deux chambres latérales 47, 48 sont réunies par un canal d'équilibrage 50, dont la section n'est pas critique.

Enfin, la cale représentée sur la Fig. 11 comporte une cavité centrale 51, deux cavités latérales 52, 53 et un canal de liaison 54 entre les cavités 51, 52 en tous points identiques à ceux de l'exemple précédent. Dans ce cas, l'équilibrage des pressions statiques entre les cavités latérales 52, 53 est assuré par un canal d'équilibrage 55 reliant le canal 54 à la cavité 53. Ce canal 55 doit alors avoir une section nettement inférieure à celle du canal 54, au moins quatre fois plus faible.

## Revendications

1. Cale élastique comprenant un bloc unique (1; 20; 35; 45) en élastomère reliant deux armatures (2, 3; 21, 22; 36, 37) et délimitant au moins deux cavités (4, 5, 6; 23, 24, 25; 38, 39, 40; 46, 47, 48; 51, 52, 53) remplies de liquide et communiquant entre elles, caractérisée en ce qu'elle comporte, comme connu en soi, une cavité centrale (4; 23; 38; 46; 51) et au moins une cavité latérale (5, 6; 24, 25; 39, 40; 47, 48; 52, 53) disposée autour de la cavité centrale et communiquant par au moins un canal (7, 8; 26, 27; 41, 42; 49; 54) avec cette cavité centrale, et en ce que chaque cavité latérale est délimitée vers l'extérieur par une paroi (12, 13; 31, 32) plus mince que la paroi (10; 29) qui délimite la cavité centrale, lesdites cavités et leurs canaux de communication débouchant sur une même face du bloc en élastomère et ayant des surfaces présentant une dépouille pour permettre un démoulage aisé à partir d'une empreinte unique, ces cavités et leurs canaux de liaison étant limités par une plaque de fermeture unique (9; 28; 44).

2. Cale suivant la revendication 1, caractérisée en ce que ladite plaque de fermeture (9) est fixée sur son pourtour par sertissage sur l'une (2) des armatures reliées par le bloc en élastomère (1).

3. Cale suivant l'une quelconque des revendications 1 et 2, caractérisée en ce que la résistance à la pression des parois de la cavité centrale (4) est renforcée par une armature intermédiaire (11) noyée dans ledit bloc en élastomère (1).

4. Cale suivant l'une quelconque des revendications 1 à 3, caractérisée en ce que ladite paroi plus mince est située au droit de l'armature (2) sur laquelle est sertie la plaque de fermeture (9) et est en dehors du pourtour des autres armatures (3, 11) de la cale.

5. Cale élastique suivant la revendication 1, caractérisée en ce que chaque canal (26, 27; 41, 42; 49; 54) a une longueur qui est choisie de façon que la fréquence de résonance de la masse de liquide en mouvement dans ce canal coïncide sensiblement avec la fréquence de résonance du moteur sur sa suspension.

6. Cale élastique suivant la revendication 5, caractérisée en ce que chaque canal (26, 27; 41, 42; 49; 54) contourne en partie la cavité centrale (23; 38; 46; 51).

7. Cale élastique suivant la revendication 6, comprenant au moins deux cavités latérales disposées à peu près symétriquement par rapport à la cavité centrale, caractérisée en ce que le canal associé à une cavité latérale respective contourne la cavité centrale sur un angle compris entre 90° et 180° environ.

8. Cale élastique suivant la revendication 6, comprenant au moins deux cavités latérales disposées à peu près symétriquement par rapport à la cavité centrale, caractérisée en ce que seulement l'une (47; 52) des cavités latérales est reliée à la cavité centrale par un canal (49).

9. Cale élastique suivant la revendication 8, caractérisée en ce que ledit canal (49) contourne la cavité centrale sur un angle compris entre 270 et 360° environ.

10. Cale élastique suivant l'une quelconque des revendications 8 et 9, caractérisée en ce que les cavités latérales (47, 48) sont reliées entre elles par un canal d'équilibrage (50).

11. Cale élastique suivant l'une quelconque des revendications 8 et 9, caractérisée en ce que la ou chaque cavité latérale (53) qui n'est pas reliée directement à la cavité centrale est reliée au canal de liaison (54) par un canal d'équilibrage (55).

12. Cale élastique suivant la revendication 11, caractérisée en ce que le canal d'équilibrage (55) a une section inférieure ou égale au quart environ de la section du canal de liaison (54).

13. Cale élastique suivant l'une quelconque des revendications 1 à 12, caractérisée en ce que la cavité centrale (23) a une forme à peu près cylindrique.

14. Cale élastique suivant l'une quelconque des revendications 1 à 12, caractérisée en ce que la cavité centrale (38, 46) a une forme à peu près conique, au moins une armature ayant également, de préférence, une forme tronconique.

## Patentansprüche

1. Elastisches Lager mit einem einteiligen Block (1; 20; 35; 45) aus Elastomer, der zwei Beschläge (2, 3; 21, 22; 36, 37) verbindet und wenigstens zwei Hohlräume (4, 5, 6; 23, 24, 25; 38, 39, 40; 46, 47, 48; 51, 52, 53) begrenzt, die mit Flüssigkeit gefüllt sind und miteinander in Verbindung stehen, gekennzeichnet durch einen an sich bekannten zentralen Hohlraum (4; 23; 38; 46; 51) und durch wenigstens einen seitlichen Hohlraum (5, 6; 24, 25; 29, 40; 47, 48; 52, 53), der um den zentralen Hohlraum angeordnet ist und über wenigstens einen Kanal (7, 8; 26, 27; 41, 42; 49; 54) mit dem zentralen Hohlraum in Verbindung steht, wobei jeder seitliche Hohlraum nach aussen durch eine Wand (12, 13; 31, 32) begrenzt ist, die dünner als die den zentralen Hohlraum begrenzende Wand (10; 29) ist, wobei die Hohlräume und ihre Verbindungskanäle auf derselben Seite des Blocks aus Elastomer münden und Oberflächen mit einer Schräge aufweisen, die ein leichtes Ausformen aus einer einteligen Form ermöglicht, und wobei die Hohlräume und ihre Verbindungskanäle durch eine einteilige Verschlussplatte (9; 28; 44) begrenzt sind.

2. Elastisches Lager nach Anspruch 1, dadurch gekennzeichnet, dass die Verschlussplatte (9) an ihrem Umfang durch Umbördeln auf den einen (2) der mit dem Block (1) aus Elastomer verbundenen Beschläge befestigt ist.

3. Elastisches Lager nach Anspruch 1 oder 2, dadurch gekennzeichnet, dass der Widerstand der Wände des zentralen Hohlraums (4) gegen Druck durch einen in den Block (1) aus Elastomer engefügten Zwischenbeschlag (11) verstärkt ist.

4. Elastisches Lager nach einem der Ansprüche 1 bis 3, dadurch gekennzeichnet, dass sich die dünnere Wand an der Stelle des Beschlags (2), an den die Verschlussplatte (9) gebördelt ist, und ausserhalb des Umfangs der anderen Beschläge (3, 11) des Lagers befindet.

5. Elastisches Lager nach Anspruch 1, dadurch gekennzeichnet, dass die Länge jedes Kanals (26, 27; 41, 42; 49; 54) so gewählt ist, dass die Resonanzfrequenz der in diesem Kanal in Bewegung befindlichen Flüssigkeitsmasse im wesentlichen von der Resonanzfrequenz des auf seiner Aufhängung befindlichen Motors zusammenfällt.

6. Elastisches Lager nach Anspruch 5, dadurch gekennzeichnet, dass jeder Kanal (26, 27; 41, 42; 49; 54) den zentralen Hohlraum (23; 38; 46; 51) teilweise umgibt.

7. Elastisches Lager nach Anspruch 6 mit wenigstens zwei seitlichen Hohlräumen, die gegenüber dem zentralen Hohlraum ungefähr symmetrisch angeordnet sind, dadurch gekennzeichnet, dass der einem jeweiligen seitlichen Hohlraum zugeordnete Kanal den zentralen Hohlraum auf einen Winkel von etwa 90° bis 180° umgibt.

8. Elastisches Lager nach Anspruch 6 mit wenigstens zwei seitlichen Hohlräumen, die gegenüber dem zentralen Hohlraum ungefähr symmetrisch angeordnet sind, dadurch gekennzeichnet, dass wenigstens der eine (47; 52) der seitlichen Hohlräume über einen Kanal (49) mit dem zentralen Hohlraum verbunden ist.

9. Elastisches Lager nach Anspruch 8, dadurch gekennzeichnet, dass der Kanal (49) den zentralen Hohlraum auf einen Winkel von etwa 270° bis 360° umgibt.

10. Elastisches Lager nach Anspruch 8 oder 9, dadurch gekennzeichnet, dass die seitlichen Hohlräume (47, 48) über einen Ausgleichskanal (50) miteinander verbunden sind.

11. Elastisches Lager nach Anspruch 8 oder 9, dadurch gekennzeichnet, dass der oder jeder seitliche Hohlraum (53), der mit dem zentralen Hohlraum nicht unmittelbar verbunden ist, über einen Ausgleichskanal (55) mit dem Verbindungskanal (54) verbunden ist.

12. Elastisches Lager nach Anspruch 11, dadurch gekennzeichnet, dass der Querschnitt des Ausgleichskanals (55) kleiner oder gleich etwa 1/4 des Querschnitts des Verbindungskanals (54) ist.

13. Elastisches Lager nach einem der Ansprüche 1 bis 12, dadurch gekennzeichnet, dass der zentrale Hohlraum (23) ungefähr zylindrisch ist.

14. Elastisches Lager nach einem der Ansprüche 1 bis 12, dadurch gekennzeichnet, dass der zentrale Hohlraum (38, 46) ungefähr kegelförmig ist, wobei wenigstens ein Beschlag ebenfalls vorzugsweise kegelstumpfförmig ist.

## Claims

1. Elastically yieldable block structure comprising a single block of elastomer (1; 20; 35; 45) interconnecting two armatures (2, 3; 21, 22; 36, 37) and defining at least two cavities (4, 5, 6; 23, 24, 25; 38, 39, 40; 46, 47, 48; 51, 52, 53) filled with liquid and communicating with each other, characterized in that it comprises, as known *per se*, a main center cavity (4; 23; 38; 46; 51) and at least a lateral cavity (5, 6; 24, 25; 39, 40; 47, 48; 52, 53) located around the center cavity and communicating with said center cavity through at least one passageway (7, 8; 26, 27; 41, 42; 49; 54), and in that each lateral cavity is defined outwardly by a wall (12, 13; 31, 32) which is thinner than the wall (10; 29) which defines the center cavity, said cavities and the connecting passageways opening onto a common face of the block of elastomer and having surfaces having a draft so as to permit an easy withdrawal of the block from a single mould, and said cavities and the connecting passageways being defined by a single closing plate (9; 28; 44).

2. Block structure as claimed in claim 1, characterized in that said closing plate (9) is fixed on its periphery by forming it over onto one (2) of the armatures interconnected by the block of elastomer (1).

3. Block structure as claimed in claim 1, characterized in that the resistance to pressure of the walls of the center cavity (4) is reinforced by an intermediate armature (11) embedded in said block of elastomer (1).

4. Block structure as claimed in any one of the claims 1 to 3, characterized in that said thinner wall is located adjacent to the armature (2) to which the closing plate (9) is fixed by a forming over thereof and is located outside the periphery of the other armatures (3, 11) of the block structure.

5. Block structure as claimed in claim 1, characterized in that each passageway (26, 27; 41, 42; 49; 54) has a length which is such that the frequency of resonance of the mass of liquid in movement in the passageway substantially coincides with the frequency of resonance of the engine on its suspension.

6. Block structure as claimed in claim 5, characterized in that each passageway (26, 27; 41, 42; 49; 54) partly surrounds the center cavity (23; 38; 46; 51).

7. Block structure as claimed in claim 6, comprising at least two lateral cavities disposed substantially symmetrically relative to the center cavity, characterized in that the passageway associated with a respective one of the lateral cavities surrounds the center cavity to an angular extent of substantially 90 to 180°.

8. Block structure as claimed in claim 6, comprising at least two lateral cavities disposed substantially symmetrically relative to the center cavity, characterized in that only one (47; 52) of the lateral cavities is connected to the center cavity by a passageway (49).

9. Block structure as claimed in claim 8, characterized in that said passageway (49) surrounds the center cavity to an angular extent of substantially 270 to 360°.

10. Block structure as claimed in claim 8 or 9, characterized in that the lateral cavities (47, 48) communicate through a balancing passageway (50).

11. Block structure as claimed in claim 8 or 9, characterized in that the or each lateral cavity (53) which is not directly connected to the center cavity communicates with the connecting passageway (54) through a balancing passageway (55).

12. Block structure as claimed in claim 11, characterized in that the balancing passageway (55) has a sectional area which is at the most substantially one quarter of the sectional area of the connecting passageway (54).

13. Block structure as claimed in any one of the claims 1 to 12, characterized in that the center cavity (23) has a substantially cylindrical shape.

14. Block structure as claimed in any one of the claims 1 to 12, characterized in that the center cavity (38, 46) has a substantially conical shape, at least one of the armature having, preferably, a frustoconical shape.

0 012 638

FIG.1

FIG.2

FIG.3

0 012 638

FIG.4

FIG.5

FIG. 6

5à15 Hz

2

0012638

42    44    41

8          8

38          37

39          43

35

36

FIG.7

42

40

38

39

41

7          7

FIG.8

3

0012638

FIG.9

FIG.10

FIG.11

4